# EUROPÄISCHE PATENTSCHRIFT

(11) **EP 4 291 886 B1**
(45) Veröffentlichungstag und Bekanntmachung des Hinweises auf die Patenterteilung: **04.02.2026**
(21) Anmeldenummer: 22722136.3
(22) Anmeldetag: 07.04.2022
(51) Int. Cl.: G01N 29/14, F16C 19/00, G01M 5/00, G01N 29/44, G07C 5/00

(54) **VORRICHTUNG ZUM BESTIMMEN VON SCHÄDIGUNGEN AN STRUKTURBAUTEILEN SOWIE ARBEITSMASCHINE MIT EINER SOLCHEN VORRICHTUNG**
APPARATUS FOR DETERMINING DAMAGE ON STRUCTURAL COMPONENTS AND WORK MACHINE COMPRISING SUCH AN APPARATUS
APPAREIL POUR LA DÉTERMINATION DE DOMMAGES SUR DES COMPOSANTS STRUCTURELS ET ENGIN DE CHANTIER COMPRENANT UN TEL APPAREIL

(30) Priorität: 08.04.2021 DE 102021108748
(43) Veröffentlichungstag der Anmeldung: 20.12.2023
(73) Patentinhaber: Liebherr-Components Biberach GmbH, 88400 Biberach an der Riß (DE)
(72) Erfinder: MUPENDE, Yvon Ilaka, 89231 Neu-Ulm (DE); WEIMER, Johannes, 88400 Biberach (DE)
(74) Vertreter: Lorenz Seidler Gossel Part. mbB
(86) Internationale Anmeldenummer: PCT/EP2022/059298
(87) Internationale Veröffentlichungsnummer: WO 2022/214608

(56) Entgegenhaltungen:
- EP-A1- 2 402 731
- EP-A1- 2 544 010
- WO-A1-2010/085971
- JP-A- H0 618 491
- US-A1- 2003 030 565

## Beschreibung

Die vorliegende Erfindung betrifft eine Vorrichtung zum Bestimmen von Schädigungen an Strukturbauteilen, wie Großwälzlagern, von Arbeitsmaschinen, wie Bau-, Materialumschlags- und/oder Fördermaschinen, mit zumindest einem Körperschalsensor zum Erfassen von Körperschallsignalen zumindest eines Strukturbauteils sowie einer Auswerteeinrichtung zum Auswerten der erfassten Körperschallsignale und Bestimmen des Schädigungszustands anhand eines Vergleichs der erfassten Körperschallsignale mit zumindest einem Körperschall-Referenzmuster. Die Erfindung betrifft weiterhin auch eine solche Arbeitsmaschine mit einer solchen Vorrichtung zum Bestimmen von Schädigungen an Strukturbauteilen der Arbeitsmaschine.

Bei Baumaschinen wie Baggern, Kranen, Muldenkippern, Planierraupen, Bulldozern oder Seilbaggern, oder Materialumschlagsmaschinen oder Förderanlagen wie Staplern und Ladern oder anderen größeren Arbeitsmaschinen wie Oberflächenfräsern oder Schiffskranen ist es gleichermaßen wichtig und schwierig, die Restlebensdauer bzw. die verbleibende Zeitspanne bis zum notwendigen Austausch eines Strukturteils vorherzusagen. Fällt eine Baumaschine im Einsatz auf einer Baustelle aus, weil beispielsweise ein Lager sich frisst oder überhitzt, kann oft nicht gleich eine passende Ersatzmaschine beschafft und an die Baustelle angeliefert werden, sodass während der für die Reparatur benötigten Reparaturzeit auf der Baustelle Verzögerungen anfallen, wobei oft nicht nur die Aufgaben der ausgefallenen Baumaschine selbst liegen bleiben, sondern aufgrund des verzahnten Ineinandergreifens der verschiedenen Baumaschinen auch andere Abläufe Verzögerungen erfahren. Eine ähnliche Problematik ergibt sich ebenfalls bei den vorgenannten Materialumschlagsmaschinen und Förderanlagen.

Dabei sind es oft nur einzelne Komponenten bzw. Strukturbauteile, die per se einfach zu tauschen sind und keine größeren Folgeverzögerungen auslösen würden, wenn der Austausch rechtzeitig planbar ist, andererseits aber auch größere Reparaturaufwände verursachen können, wenn bei einem Bruch des kleinen Strukturbauteils auch andere Maschinenkomponenten in Mitleidenschaft gezogen werden.

Dabei ist es an sich normal, dass jeweilige Strukturbauteile mit fortschreitender Betriebsdauer einen gewissen Verschleiß zeigen, ohne dass dies gleich einen Austausch der Komponente bedingen würde. Solange die Funktion des Bauteils gewährleistet ist und kein Ausfall droht, werden solche für den Betrieb ungefährlichen Verschleißerscheinungen in Kauf genommen, um die Lebensdauer auszureizen. Solche kleineren, erträglichen Verschleißerscheinungen können beispielsweise kleine, für die Festigkeit unkritische Haarrisse oder kleinere Oberflächenausbrüche bzw. Pittings weniger funktionsrelevanter Oberflächen sein. Solche Verschleißerscheinungen können aber auch andere Bauteilveränderungen wie Nachlassen der Elastizität oder zunehmendes Lagerspiel sein.

Je nachdem, wie die Strukturbauteile einer Arbeitsmaschine überwacht werden, kann es sehr schwierig sein, kritische Schädigungen von unkritischen Schädigungen zu unterscheiden, da die Signalantwort der bauteilüberwachenden Sensorik schon bei kleineren Bauteilveränderungen mehr oder minder große Veränderungen zeigen kann.

Bei einer Überwachung der Körperschall-Emissionen einer Maschinenstruktur mittels Akustik- bzw. Körperschallsensoren können sich Signalveränderungen aufgrund einer Vielzahl von Bauteilveränderungen ergeben. Beispielsweise können die Schallemissionen quantitativ zunehmen oder sich vom Frequenzband oder -muster her verändern, wenn beispielsweise das Lagerspiel aufgrund von normalem Verschleiß zunimmt und/oder sich aufgrund von Verschmutzungen und sich hieraus ergebenden Unwuchten ein unrunder Lauf oder ein ruckelnder Betrieb eintritt. Während solche Verschleißerscheinungen noch keine für den Betrieb kritische Schädigung darstellen, können aber auch die Restlebensdauer gefährdende bzw. verkürzende Schädigungen wie Risse im Laufring eines Großwälzlagers oder größere Pittings in der Lauffläche eines Wälzlagers zu erhöhten Körperschall-Emissionen bzw. einer Veränderung des Frequenzmusters des Körperschalls führen.

Insofern ist es schwierig, aus Abweichungen der tatsächlich erfassten Körperschallsignale von einem oder mehreren Körperschall-Referenzmustern auf den konkreten Schädigungszustand des Strukturbauteils rückzuschließen. Insbesondere können fest vorgegebene Abweichungs- bzw. Toleranzgrenzen zu einer überhohen Fehlerquote und einer nur unscharfen Prognose der Restlebensdauer bzw. des Wartungsbedarfs führen.

Ein Überwachungssystem umfassend eine Vielzahl von Sensoren, wobei jeder Sensor unter anderem ein Vibrationssensormodul und ein Temperatursensormodul umfasst, ist aus der Schrift US 2003/0030565 A1 bekannt. Die aus den Sensormodulen gewonnenen Daten werden mit vorgegebenen Grenzwerten für Vibrationen und Temperaturen verglichen, um so Abnormitäten festzustellen.

Ein Verfahren zum Training eines Systems zur Klassifikation eines Wälzlagerzustands wird in der Schrift EP 2 402 731 A1 offenbart.

Die Schrift EP 2 544 010 A1 offenbart ein Modul zum Überwachen einer für einen Zustand eines Lagers oder Wälzlagers charakteristischen physikalischen Größe. Weitere Überwachungs- und Schadensdetektionssysteme sind darüber hinaus aus der Schrift WO 2010/085971 A1 und JP H06 18491 A bekannt.

Der vorliegenden Erfindung liegt daher die Aufgabe zugrunde, eine verbesserte Vorrichtung sowie eine verbesserte Arbeitsmaschine der eingangs genannten Art zu schaffen, die Nachteile des Standes der Technik vermeiden und letzteren in vorteilhafter Weise weiterbilden. Insbesondere soll eine dauerhaft scharfgehaltene Prognose des Wartungsbedarfs bzw. der Restlebensdauer mit einer geringen Fehlerquote anhand des Körperschalls der Arbeitsmaschine ermöglicht werden.

Erfindungsgemäß wird die genannte Aufgabe durch eine Vorrichtung gemäß Anspruch 1 sowie eine Arbeitsmaschine gemäß Anspruch 14 gelöst. Bevorzugte Ausgestaltungen der Erfindung sind Gegenstand der abhängigen Ansprüche.

Es wird also vorgeschlagen, die Auswertung der erfassten Körperschallsignale und/oder ein für die Auswertung herangezogenes Körperschallsignal-Referenzmuster laufend an Veränderungen eines Maschinen- und/oder Betriebszustands und/oder eines Umwelteinflusses, die die Körperschall-Emissionen der Arbeitsmaschine beeinflussen können, anzupassen, um mit einer geringeren Fehlerquote schärfere Prognosen treffen zu können. Erfindungsgemäß sind eine Erfassungseinrichtung zum Erfassen von körperschallrelevanten Maschinen- und/oder Betriebszustands- und/oder Umweltveränderungen sowie eine Anpasseinrichtung zum Anpassen des zumindest einen Körperschallsignal-Referenzmusters und/oder zumindest eines Auswertekriteriums der Auswerteeinrichtung anhand der erfassten Zustands- und/oder Umweltveränderungen vorgesehen. Durch Aktualisieren des Referenzmusters und/oder der Auswertekriterien der Auswerteeinrichtung anhand von sich ergebenden Zustands- und/oder Umweltveränderungen können abnormale Körperschall-Emissionen exakter identifiziert und schärfer von unkritischen Veränderungen des Körperschalls unterschieden und somit eine präzisere Bestimmung von Schädigungen erreicht werden.

Vorteilhafterweise können dabei mehrere Maschinen- und/oder Betriebszustands- und/oder Umweltparameter erfasst und für die Anpassung der Körperschallsignal-Auswertung berücksichtigt werden, wobei verschiedene Parameter verschieden gewichtet und/oder in unterschiedlicher Weise berücksichtigt werden können. Vorteilhafterweise werden zumindest zwei körperschallrelevante Zustands- und/oder Umwelteinflussveränderungen im Zusammenspiel für die Anpassung der Körperschallauswertung berücksichtigt.

Hierbei kann eine Veränderung eines jeweiligen Parameters jeweils absolut berücksichtigt werden, beispielsweise dahingehend, dass bei Überschreiten eines vorbestimmten Veränderungsbetrags eine Anpassung der Auswertung vorgenommen wird. Alternativ oder zusätzlich kann aber auch eine summarische Berücksichtigung erfolgen, beispielsweise dahingehend, dass bei Überschreiten einer vorbestimmten Veränderung bei summarischer Berücksichtigung der Parameter eine Anpassung erfolgt.

In Weiterbildung der Erfindung können verschiedene Parameter berücksichtigt werden. Insbesondere kann zunächst ein Alterserfassungsmittel das Alter und/oder die Betriebsstunden bzw. die Betriebsdauer der Arbeitsmaschine und/oder eines vorbestimmten Strukturbauteils erfassen, wobei die genannten Alterserfassungsmittel beispielsweise einen Betriebsstundenzähler aufweisen und/oder auch eine Eingabevorrichtung umfassen können, mittels derer von einem Maschinennutzer zyklisch das Alter bzw. die Betriebszeit eingegeben werden können.

In Abhängigkeit des erfassten Alters bzw. der erfassten Betriebsstunden kann die genannte Anpasseinrichtung zumindest ein Auswertekriterium der Auswerteeinrichtung und/oder das Körperschallsignal-Referenzmuster anpassen. Beispielsweise kann mit zunehmendem Bauteilalter eine Toleranzschwelle für zulässige Abweichungen vom Referenzmuster erhöht oder das Signalniveau des Referenzmusters selbst erhöht werden, da üblicherweise mit zunehmendem Alter die Körperschall-Emissionen zunehmen. Alternativ oder zusätzlich kann aber auch das Referenzmuster hinsichtlich seines Frequenzbands und/oder -verlaufs in Abhängigkeit des Alters verändert werden, beispielsweise wenn aufgrund zunehmendem Lagerspiel der Körperschall eine Frequenzverschiebung erfährt.

Alternativ oder zusätzlich zu einem solchen Alterserfassungsmittel kann die Erfassungseinrichtung aber auch Umwelteinfluss-Erfassungsmittel zum Erfassen von Umwelteinflüssen auf die Arbeitsmaschine aufweisen. Solche Umwelteinfluss-Erfassungsmittel können beispielsweise einen Temperatursensor zum Erfassen der Umgebungstemperatur und/oder einen Schmutzsensor zum Erfassen von Schmutz, Staub oder anderen Partikeln in der Umgebungsluft aufweisen. Alternativ oder zusätzlich können die Umwelteinfluss-Erfassungsmittel einen Feuchtesensor und/oder einen Salzgehaltsensor und/oder einen UV-Lichtsensor aufweisen. Solche Umwelteinflüsse wie Staub und Partikel in der Luft, die sich beispielsweise an Lagerflächen oder Verzahnungs-Eingriffsflächen festsetzen können, oder ein erhöhter Salzgehalt, der zu vorzeitiger Korrosion führen kann, oder erhöhte Temperaturen, die zu Bauteilausdehnungen und beispielsweise verringertem Lagerspiel führen können, haben einen Einfluss auf das charakteristische Körperschall-Emissionsbild der Arbeitsmaschine und können letzteres auch ohne Bauteilschädigungen verändern. Um dennoch schädigungsrelevante Abweichungen der Körperschallsignale vom normalen Körperschall-Emissionsbild verlässlich bestimmen zu können, kann die Anpasseinrichtung die Auswertekriterien und/oder das Körperschallsignal-Referenzmuster entsprechend der erfassten Umweltveränderungen anpassen.

Alternativ oder zusätzlich zu einer Erfassung der genannten Umwelteinflüsse kann die Erfassungseinrichtung auch zumindest einen Maschinen- und/oder Betriebszustandsparameter der Arbeitsmaschine erfassen und hierzu entsprechende Zustandserfassungsmittel aufweisen. Beispielsweise kann die Erfassungseinrichtung eine Rüstzustands-Sensorik und/oder -Eingabemittel aufweisen, um einen bestimmten Rüstzustand oder Veränderungen des Rüstzustands der Arbeitsmaschine erfassen zu können. Beispielsweise können bei einem Hebezeug die Ballastmenge oder bei einem beweglich gelagerten Strukturteil die Schmiermittelversorgung erfasst werden, um durch eine beispielsweise höhere Ballastbelastung oder eine verringerte Schmiermittelversorgung bedingte Veränderungen des Körperschalls abschätzen und die Auswertekriterien bzw. das Referenzmuster der Auswerteeinrichtung entsprechend anpassen zu können.

Die genannten Maschinen- und/oder Betriebszustands-Erfassungsmittel können aber auch andere Parameter wie beispielsweise einen verschleißrelevanten Parameter wie das Lagerspiel eines Wälzlagers erfassen, oder im Betrieb variierende Belastungsgrößen wie beispielsweise die Hublast eines Krans und/oder das auf den Kran und damit beispielsweise ein Drehwerks-Großlager wirkendes Kippmoment erfassen. Je nachdem, unter welcher Betriebsbelastung die Arbeitsmaschine betrieben wird, kann zumindest ein Auswertekriterium und/oder das Körperschallsignal-Referenzmuster von der Anpasseinrichtung angepasst werden, um eine verlässliche Identifikation von schädigungsrelevanten Körperschallsignalen zu ermöglichen.

Die Anpassung der Körperschallsignal-Auswertung an sich verändernde Umgebungs- und/oder Betriebsbedingungen bzw. Alterungseinflüsse erfolgt nicht anhand von starren Kriterien, sondern mit Hilfe eines sich selbst weiterbildenden, variablen Regelsatzes. Die genannte Auswerteeinrichtung und die Anpasseinrichtung ist als selbstlernendes System ausgebildet bzw. bilden die genannten Komponenten einen Teil eines selbstlernenden Systems, das den Einfluss der erfassten Zustands- und/oder Umweltveränderungen auf den Körperschall und/oder auf die Auswertung der Körperschallsignale abschätzt.

Insbesondere können die Auswerteeinrichtung und die genannte Anpasseinrichtung mit künstlicher Intelligenz ausgebildet bzw. in einem KI-System implementiert sein, das beispielsweise einen Regressionsanalysebaustein aufweisen kann, um eine Beziehung zwischen den erfassten Zustands- und/oder Umweltveränderungen und den Körperschallsignalen bzw. dem charakteristischen Körperschallsignal-Referenzmuster der Arbeitsmaschine bzw. des Strukturbauteils abschätzen kann. Beispielsweise kann der genannte Regressionsanalysebaustein einen funktionellen Zusammenhang zwischen den genannten Parametern bzw. eine Kurve, die die Abhängigkeit der Körperschallemissionen von den genannten Zustands- und Umweltparametern charakterisiert, anpasst bzw. weiterbildet, vorzugsweise unter Heranziehung der laufend erfassten Zustands- und/oder Umweltveränderungen und der sich einstellenden Körperschallsignalen, insbesondere unter weiterer Zuhilfenahme eines Trainingssatzes der genannten Parameter. Der genannte Trainingssatz von Parametern kann ursprünglich vorgegeben, bspw. anhand eines oder mehrerer Testläufe gewonnen werden, und/oder laufend fortgeschrieben oder erweitert werden, insbesondere durch im Maschinenbetrieb gewonnene Daten.

Vorteilhafterweise kann das System dazu ausgebildet sein, im Neuzustand des Strukturbauteils das Schwingverhalten und/oder die Schwingantwort des Strukturbauteils im Betrieb und/oder auf vorbestimmte Belastungen zu ermitteln, wobei das System hierzu einen Neuzustand-Ermittlungs-Baustein umfassen kann, der mit einem hinterlegten Algorithmus das besagte Schwingverhalten und/oder die Schwingantwort des Strukturbauteils ermitteln kann. Insbesondere kann eine Grundsystemcharakteristik und eine Systemgrundcharakteristik bestimmt werden. Das Schwingverhalten und/oder die Schwingantwort des Strukturbauteils im Neuzustand und/oder die abgeleitete Grundsystemcharakteristik und/oder die Systemgrundcharakteristik können als Referenz-Muster für die Überwachung des Strukturbauteils herangezogen werden. Für die Bestimmung der Grundsystemcharakteristik und der Systemgrundcharakteristik können Kennwerte aus Messsignalen eines oder mehrerer Sensoren, aus der Frequenzanalyse und/oder der Frequenzbetrachtung des zumindest einen Messsignals, dem Energieinhalt des Messsignals, dem Vergleich von Messsignalabschnitten und/oder andere Analysemethoden und deren Kombination verwendet werden.

Vorteilhafterweise kann die Auswerteeinrichtung dazu ausgebildet sein, im Betrieb einen stetigen Vergleich zwischen einer Live-Schwingantwort mit der genannten Grundsystemcharakteristik und/oder der genannten Systemgrundcharakteristik durchzuführen und das Vergleichsergebnis mit einer Toleranzgrenze abgleichen. Insbesondere kann die Auswerteeinrichtung dazu ausgebildet sein, bei einer Überschreitung einer Toleranzgrenze ein unzulässiges Ereignis und/oder einen unzulässigen Betriebszustand anzunehmen und ggf. einen Prüfmodus anzustoßen, welcher vorzugsweise eine Ursache für die Überschreitung der Toleranzgrenze daraufhin analysiert, ob die Ursache in den Umgebungsbedingungen und/oder einer Überlastung und/oder einem anderen Systemzustand liegt.

Wird im besagten Prüfmodus eine Ursache positiv identifiziert, kann die Überschreitung der Toleranzgrenze darauf bezogen werden, während anderenfalls davon ausgegangen werden kann, dass es eine Veränderung am Strukturbauteil, insbesondere in der Struktursteifigkeit ist, und/oder das System nicht mehr betrieben werden darf und einer detaillierten Überprüfung bedarf.

Die genannte Toleranzgrenze wird vorteilhafterweise mit Hilfe des selbstlernenden Systems kontinuierlich oder zyklisch immer wieder neu bestimmt. Vorteilhafterweise kann in die Bestimmung der Toleranzgrenze eine aktuelle Maschinenzustandsgröße wie beispielsweise ein Verschleiß, eine Alterung von Komponenten und dergleichen, und/oder vorherige Toleranzgrenzenüberschreitungen einbezogen werden bzw. Berücksichtigung finden. Die neu bestimmte Toleranzgrenze wird in die Überprüfungsschleife einbezogen, so dass die Toleranzgrenzen an den neuen Anlagenzustand angepasst werden.

Insbesondere kann die Vorrichtung mittels künstlicher Intelligenz die ständig gemessene Körperschallantwort des Strukturbauteils bzw. der gesamten Arbeitsmaschine oder einer Unterbaugruppe hiervon mit dem hierfür charakteristischen Körperschall-schwingverhalten, dem sogenannten akustischen Footprint der Arbeitsmaschine verglichen, um Schädigungen an einem oder mehreren Strukturbauteilen, insbesondere eine Rissbildung zu identifizieren.

Mittels des KI-Systems kann der genannte akustische Footprint der Arbeitsmaschine bzw. des oder der Strukturbauteile insbesondere in Abhängigkeit vom Alter der Arbeitsmaschine und/oder des Strukturbauteils, den Maschinenzustand und den Veränderungen von Umwelteinflüssen angepasst werden. Hierdurch kann die Prognose immer scharf gehalten und die Fehlerquote minimiert werden.

Um ein aussagekräftiges Körperschallbild zu erhalten, kann es vorteilhaft sein, zumindest einen Körperschallsensor einem Wälzlager der Arbeitsmaschine zuzuordnen, um den von dem Wälzlager abgegebenen Körperschall zu erfassen. Vorteilhafterweise können dabei Körperschallsensoren einem oder beiden Laufringen des Wälzlagers zugeordnet sein, um den Körperschall direkt am Laufring des Wälzlagers zu erfassen.

Um die Arbeitsmaschine insgesamt besser auf Schädigungen überwachen zu können, können mehreren Wälzlagern der Anlage, die gemeinsam ein rotatorisches Bauteil oder auch separat mehrere rotatorische Bauteile lagern können, zugeordnet sein, um den Körperschall der mehreren Wälzlager erfassen zu können.

Die Auswerteeinrichtung kann die Körperschallemissionen der verschiedenen Wälzlager miteinander vergleichen, um Veränderungen des Körperschallbildes an einem Wälzlager mit einhergehenden Veränderungen des Körperschallbilds an einem oder mehreren Wälzlagern zu vergleichen und insofern abnormale Veränderungen des Körperschallbildes präziser erfassen zu können. Ein solcher Vergleich kann zusätzlich zu der genannten Anpassung der Auswertekriterien und/oder des Signalreferenzmusters vorgenommen werden.

In Weiterbildung der Erfindung kann das Strukturbauteil insbesondere ein Großwälzlager, beispielsweise ein mittenfreies Großwälzlager mit einem Durchmesser von mehr als 0,5 m oder mehr als 1,0 m hinsichtlich der Körperschallemissionen überwacht werden.

Die Erfindung wird nachfolgend anhand bevorzugter Ausführungsbeispiele und zugehöriger Zeichnungen näher erläutert. In den Zeichnungen zeigen:

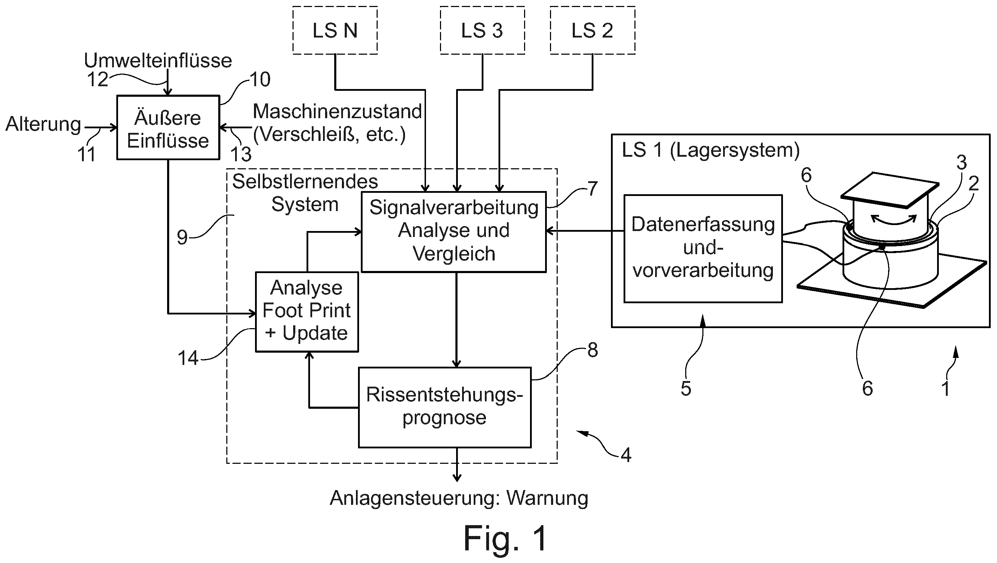

- Fig. 1:: eine schematische Darstellung einer Vorrichtung zum Bestimmen von Schädigungen an Strukturbauteilen einer Arbeitsmaschine nach einer vorteilhaften Ausführung der Erfindung, wobei die Vorrichtung ein selbstlernendes System zum Anpassen der Körperschall-Signalauswertung aufweist und Schädigung wie insbesondere eine Rissbildung an einem Wälzlager bestimmen kann,

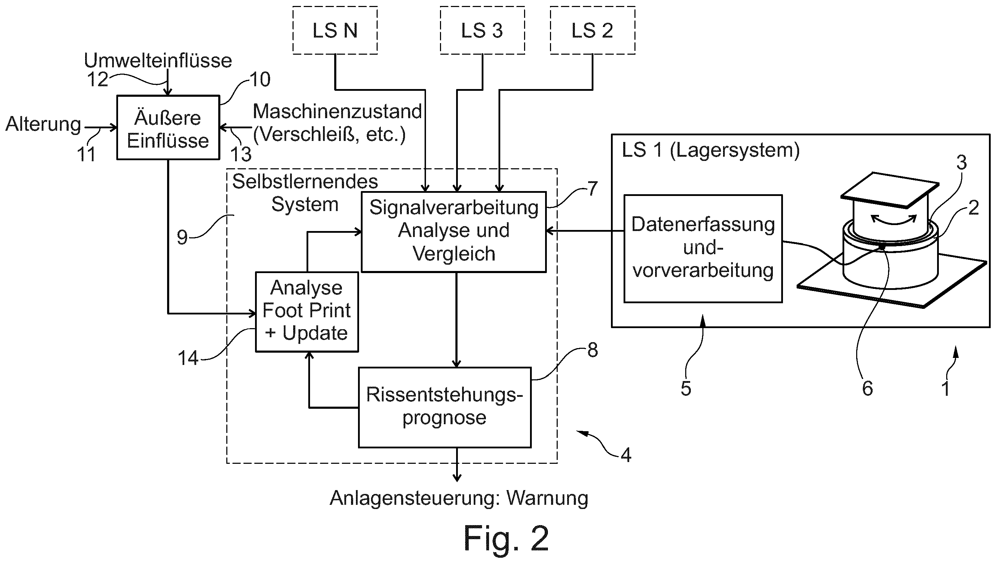

- Fig. 2:: eine schematische Darstellung einer Vorrichtung zum Bestimmen von Schädigungen an Strukturbauteilen einer Arbeitsmaschine ähnlich Fig. 1, wobei die Vorrichtung im Vergleich zu Fig. 1 mit nur einem Körperschallsensor den Körperschall am Außenring des Wälzlagers erfasst,

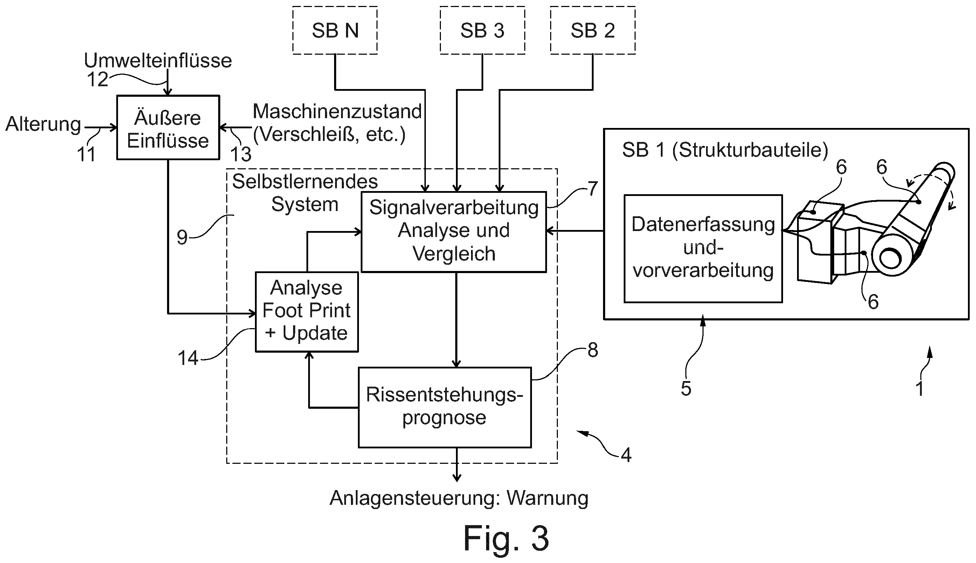

- Fig. 3:: eine schematische Darstellung einer Vorrichtung zum Bestimmen von Schädigungen an Strukturbauteilen einer Arbeitsmaschine nach einer weiteren vorteilhaften Ausführung der Erfindung, wobei die Vorrichtung ein selbstlernendes System zum Anpassen der Körperschallsignalauswertung aufweist und Schädigungen wie insbesondere eine Rissbildung an einem schwenkbaren Strukturbauteil wie beispielsweise einem schwenkbaren Ausleger oder Hebel bestimmen kann, wobei Körperschallsensoren am schwenkbaren Ausleger, am Schwenklagertragarm und an der Lagerbasis vorgesehen sind,

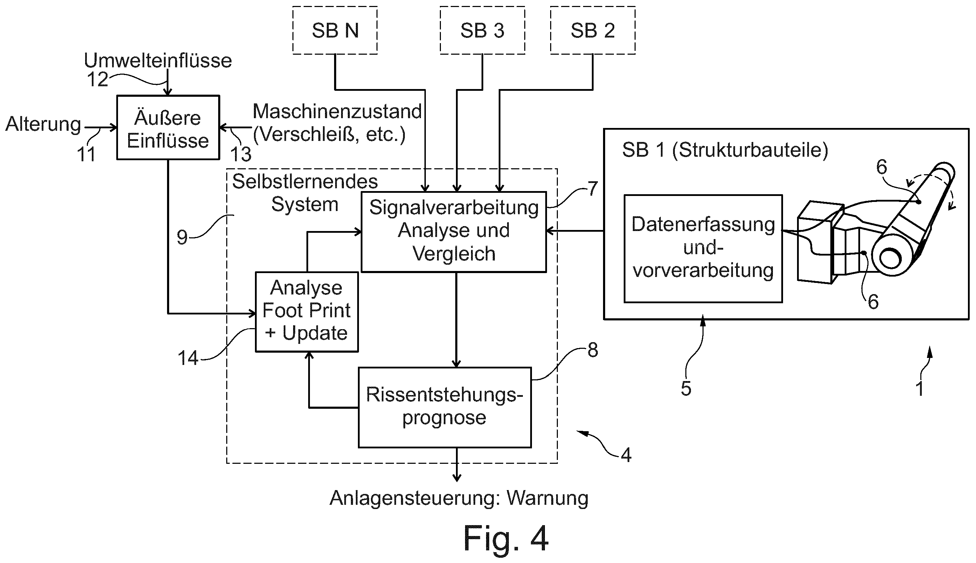

- Fig. 4:: eine schematische Darstellung einer Vorrichtung zum Bestimmen von Schädigungen an Strukturbauteilen einer Arbeitsmaschine ähnlich Fig. 3, wobei im Vergleich zur Fig. 3 Körperschallsensoren 6 am schwenkbaren Ausleger und am Schwenklagertragarm vorgesehen sind,

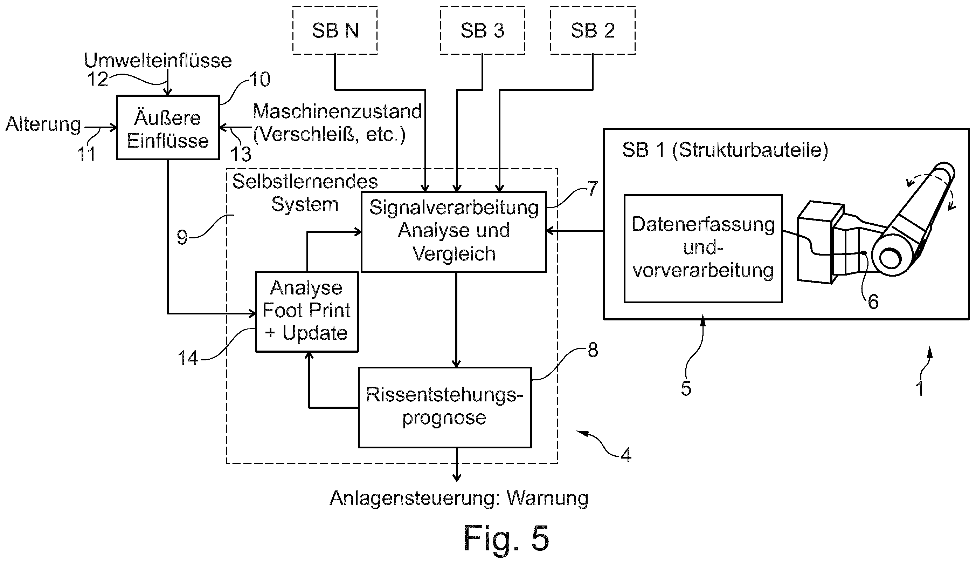

- Fig. 5:: eine schematische Darstellung einer Vorrichtung zum Bestimmen von Schädigungen an Strukturbauteilen einer Arbeitsmaschine ähnlich den Figuren 3 und 4, wobei Körperschall nur mittels eines Körperschallsensors am Schwenklagertragarm erfasst wird,

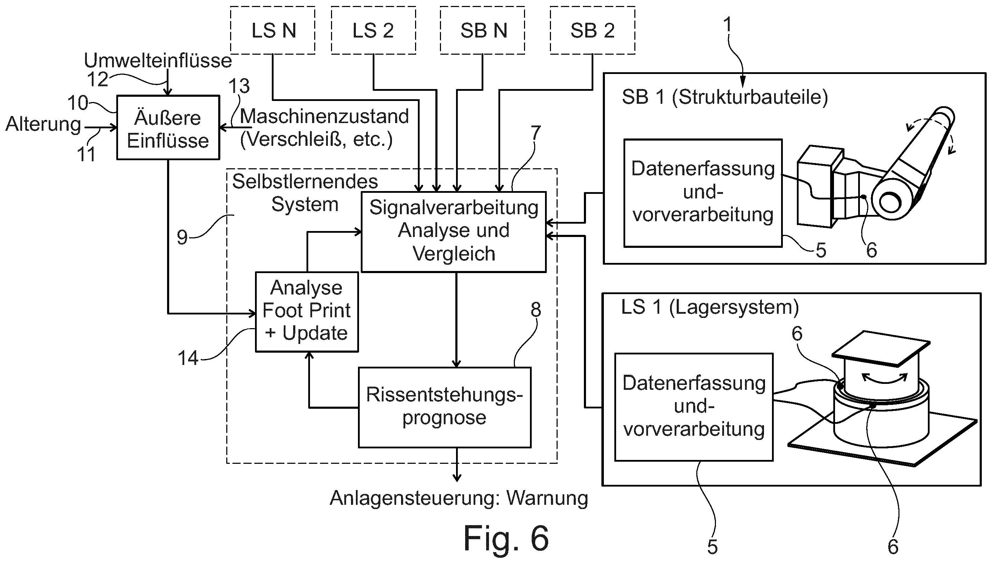

- Fig. 6:: eine schematische Darstellung einer Vorrichtung zum Bestimmen von Schädigungen an Strukturbauteilen einer Arbeitsmaschine nach einer weiteren vorteilhaften Ausführung der Erfindung, wobei mittels eines Körperschallsensors Körperschall an einem Strukturbauteil wie einem Schwenklagertragarm sowie Körperschall mittels eines oder mehrerer Körperschallsensoren an den Lagerring eines Wälzlagers erfasst werden,

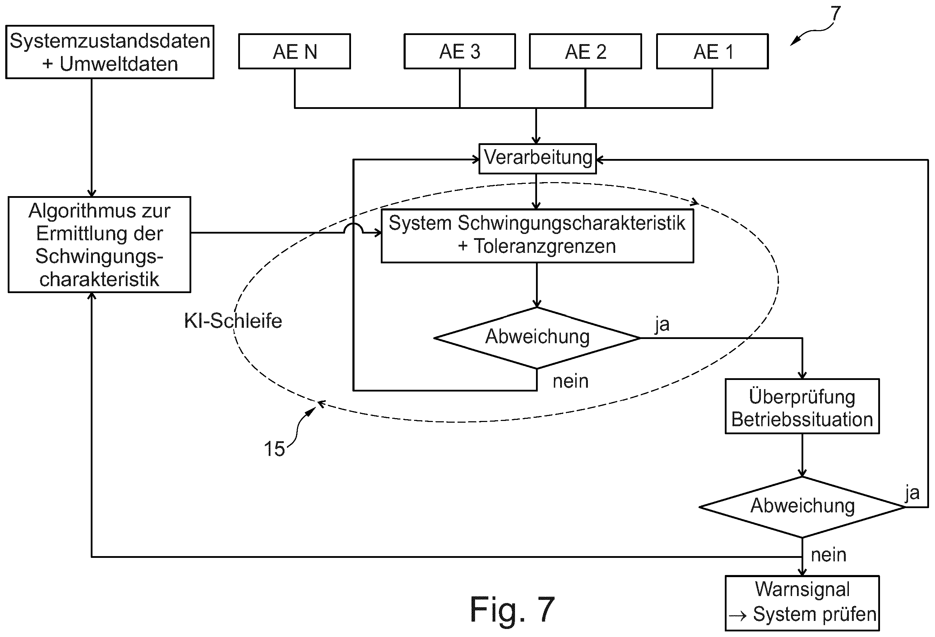

- Fig. 7:: eine schematische Darstellung der Vorrichtung zum Bestimmen von Schädigungen an Strukturbauteilen nach einer vorteilhaften Ausbildung der Erfindung, die das selbstlernende System zur Bestimmung der Schwingungscharakteristik des Strukturbauteils und/oder der Arbeitsmaschine und zum Abgleich des Live-Schwingverhaltens mit der ermittelten Schwingungscharakeristik zeigt, wobei ein Anpassvorgang zum Anpassen der Schwingungscharakteristik und deren Toleranzgrenzen mittels eines Kl-basierten Bausteins dargestellt ist,

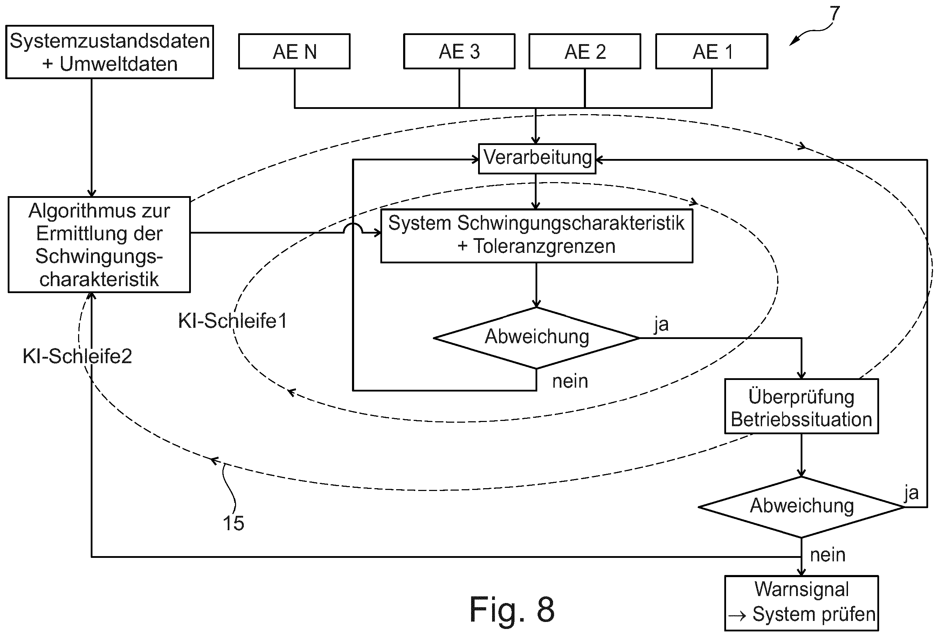

- Fig. 8:: eine schematische Darstellung der Vorrichtung zum Bestimmen von Schädigungen an Strukturbauteilen nach einer weiteren vorteilhaften Ausbildung der Erfindung ähnlich Fig. 7, die das selbstlernende System zur Bestimmung der Schwingungscharakteristik des Strukturbauteils und/oder der Arbeitsmaschine und zum Abgleich des Live-Schwingverhaltens mit der ermittelten Schwingungscharakeristik zeigt, wobei ein Anpassvorgang zum Anpassen der Schwingungscharakteristik und deren Toleranzgrenzen mittels eines Kl-basierten Bausteins dargestellt ist, und

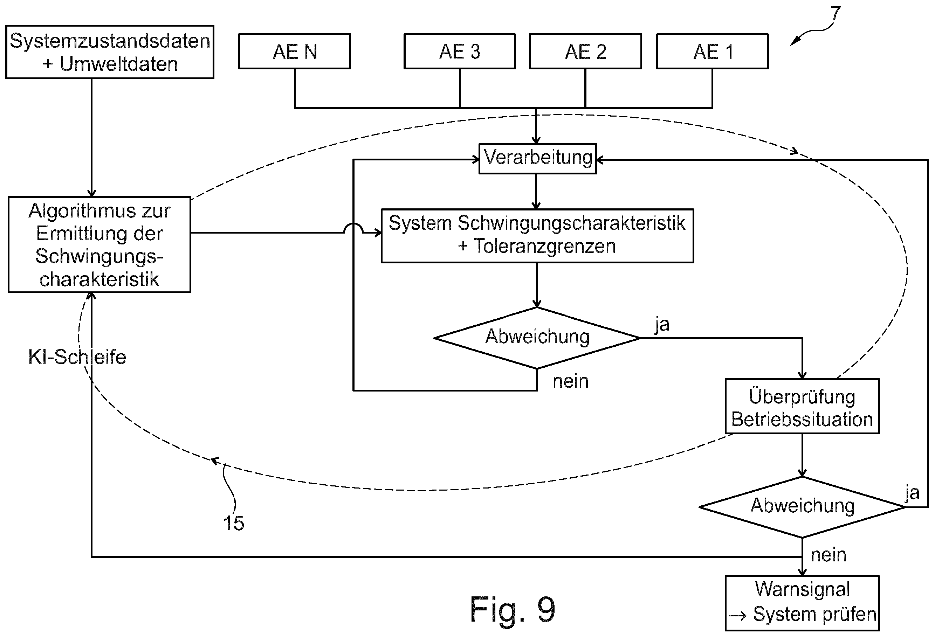

- Fig. 9:: eine schematische Darstellung der Vorrichtung zum Bestimmen von Schädigungen an Strukturbauteilen nach einer weiteren vorteilhaften Ausbildung der Erfindung ähnlich Fig. 7, die das selbstlernende System zur Bestimmung der Schwingungscharakteristik des Strukturbauteils und/oder der Arbeitsmaschine und zum Abgleich des Live-Schwingverhaltens mit der ermittelten Schwingungscharakeristik zeigt, wobei ein Anpassvorgang zum Anpassen der Schwingungscharakteristik und deren Toleranzgrenzen mittels eines Kl-basierten Bausteins dargestellt ist.

Wie Fig. 1 zeigt, kann die Arbeitsmaschine 1 mehrere Lagersysteme LS 1, LS 2, LS 3 ... LS N aufweisen, die Strukturbauteile der Arbeitsmaschine 1 rotatorisch lagern oder bilden können. Die genannten Lagersysteme LS können dabei Wälzlager mit zueinander verdrehbaren Lagerringen 2, 3 aufweisen und beispielsweise in Form von Großwälzlagern, insbesondere mittenfreien Großwälzlagern mit Durchmessern von mehr als einem Meter, ausgebildet sein, um beispielsweise große Strukturbauteile von Baumaschinen, Materialumschlagsmaschinen oder Förderanlagen wie beispielsweise Kranen zu lagern. Beispielsweise kann durch ein solches Großwälzlager die Drehbühne eines Krans oder eines Seilbaggers oder der Ausleger eines Turmdrehkrans oder auch der Rotor oder das Rotorblatt einer Windkraftanlage drehbar gelagert sein. Grundsätzlich können die Lagersysteme LS aber auch andere Wälzlager oder auch Gleitlager umfassen und/oder andere Strukturbauteile anderer Arbeitsmaschinen drehbar lagern.

Durch die Lagersysteme LS können in verschiedenen Anwendungen wie Baumaschinen, Krane, Bagger, Windkraftanlagen, Schiffe Verwendung finden und im verbauten Zustand für eine definierte Anlagen- bzw. Maschinensteifigkeit sorgen, welche zu einem individuellen Körperschall-Schwingverhalten bzw. einem sogenannten akustischen Footprint der Arbeitsmaschine 1 führt.

Um Veränderungen im Lagersystem LS bzw. in der gesamten Arbeitsmaschine 1 zu identifizieren, kann mittels einer Vorrichtung 4 das Schwingverhalten im Betrieb überwacht werden. Insbesondere kann der Körperschall erfasst und analysiert werden, um Schädigungen an den Lagersystemen LS bzw. daran gelagerten Strukturbauteilen zu bestimmen, wobei solche Schädigungen Risse, Pittings oder Ausbrechungen an den genannten Strukturbauteilen oder Wälzlagern bzw. Lagersystemen LS umfassen können.

Wie Fig. 1 zeigt, kann eine Körperschallsensorik 5 von der Arbeitsmaschine 1 bzw. deren Strukturbauteilen ausgehende Körperschallemissionen erfasst und entsprechende Körperschallsignale bereitgestellt werden.

Die genannte Körperschallsensorik 5 kann vorteilhafterweise den Lagersystemen LS zugeordnete Körperschallsensoren 6 umfassen, die an den Lagersystemen LS entstehenden Körperschall erfassen können. Vorteilhafterweise kann dabei jedem der Lagerringe 2, 3 ein Körperschallsensor 6 zugeordnet sein, vgl. Fig. 1, um eine präzise Überwachung der Körperschallemissionen an den Lagersystemen LS zu ermöglichen.

Wie Fig. 2 zeigt, kann es aber auch ausreichend sein, nur einem der Lagerringe 3 einen Körperschallsensor 6 zuzuordnen, um ein Körperschallmuster des Lagersystems ermitteln zu können.

Wie Fig. 3 zeigt, kann aber nicht nur ein Lagersystem, sondern auch eine Strukturbauteilanordnung und deren Strukturbauteile SB 2, SB 3, SB N überwacht werden. Beispielsweise können mittels mehrerer Körperschallsensoren 6 Körperschallmuster an einem schwenkbar gelagerten Hebel oder einem schwenkbar gelagerten Ausleger beispielsweise eines Krans, Körperschallmuster an einem Schwenklagertragarm und Körperschallmuster an einer Montage- oder Lagerbasis der schwenkbaren Strukturbauteilanordnung erfasst werden. Wie die Figuren 4 und 5 zeigen, kann es dabei ggf. auch ausreichend sein, den Körperschall nur mittels eines Körperschallsensors 6 am schwenkbaren Strukturbauteil und am Schwenklagertragarm zu erfassen, vgl. Fig. 4, oder nur den Körperschall mittels eines Körperschallsensors 6 am Schwenklagertragarm zu erfassen, vgl. Fig. 5.

Wie Fig. 6 zeigt, kann die Vorrichtung aber auch dazu ausgebildet sein, sowohl den Körperschall an Strukturbauteilen SB wie beispielsweise einem schwenkbaren Ausleger bzw. dessen Schwenklagertragarm zu erfassen und auch den Körperschall an einem Lagersystem LS zu erfassen, beispielsweise mittels Körperschallsensoren an den Lagerringen.

Die Körperschallsignale der Körperschallsensorik 5, die neben der Datenerfassung auch eine Datenvorverarbeitung bspw. in Form einer Signalfilterung und/oder -glättung vornehmen kann, werden einer Auswerteeinrichtung 7 zugeführt, die unmittelbar an der Arbeitsmaschine 1 vorgesehen oder auch davon beabstandet separat beispielsweise in Form eines Auswerteservers vorgesehen sein kann. Die genannte Auswerteeinrichtung 7 kann ein Datenverarbeitungssystem mit einem oder mehreren Mikroprozessoren, einem Programmspeicher und darin geladenen Softwarebausteinen umfassen, um die Körperschallsignale auf elektronischem Wege auswerten zu können.

Insbesondere kann die genannte Auswerteeinrichtung 7 die Körperschallsignale der Körperschallsensorik 5 anhand vorbestimmter, veränderbarer Auswertekriterien auswerten und/oder mit einem Körperschallsignal-Referenzmuster oder mehreren solcher Muster vergleichen, um anhand der Abweichung des erfassten Körperschallsignal-Musters von dem einen oder mehreren Referenzmustern auf den Schädigungszustand des Strukturbauteils oder der Arbeitsmaschine 1, insbesondere des Lagersystems LS rückzuschließen.

Eine Prognoseeinrichtung 8 kann anhand der ausgewerteten Körperschallsignale den Schädigungszustand des Strukturbauteils bestimmen und/oder eine Prognose über eine fortschreitende Schädigung abgeben und ggf. ein Warnsignal bereitstellen, falls eine kritische Schädigung festgestellt wird, die einen Bauteiltausch erfordert.

Die Auswertung der Körperschallsignale der Körperschallsensorik 5 wird dabei nicht anhand von starren Regeln, die vorab unveränderbar festgelegt sind, vorgenommen, sondern mittels eines selbstlernenden KI-Systems 9 laufend angepasst und fortgeschrieben, wobei einerseits die laufend erfassten Körperschallsignale berücksichtigt werden und andererseits weitere Zustands- und/oder Umgebungsparameter herangezogen werden.

Wie Fig. 1 zeigt, ist eine Erfassungseinrichtung 10 vorgesehen, die verschiedene Erfassungsmittel zum Erfassen verschiedener Zustands- und/oder Umweltparameter aufweisen kann. Insbesondere kann die Erfassungseinrichtung 10 ein Alterungs-Erfassungsmittel 11 zum Erfassen einer Alterung und/oder eines Alters und/oder der Betriebsstunden der Arbeitsmaschine 1 und/oder des jeweiligen Strukturbauteils beispielweise in Form des Lagersystems LS umfassen.

Alternativ oder zusätzlich kann die Erfassungseinrichtung 10 eine Umweltsensorik 12 zum Erfassen von Umwelteinflüssen wie Temperatur, Staub-, Schmutz- und/oder Partikelgehalt der Umgebungsluft, Salzgehalt der Umgebungsluft, Feuchte, UV-Strahlenbelastung, Eis- und Schneebelastung oder anderer relevanter Umgebungsparameter aufweisen.

Alternativ oder zusätzlich zu einer solchen Umweltsensorik 12 kann die Erfassungseinrichtung 10 weiterhin ein Zustands-Erfassungsmittel 13 zum Erfassen zumindest eines Maschinen- und/oder Betriebszustandsparameters aufweisen, wobei beispielsweise der Rüstzustand der Arbeitsmaschine 1, ein Verschleißzustand der Arbeitsmaschine 1 und/oder einzelner Strukturbauteile wie der Lagersysteme LS, beispielsweise ein Lagerspiel der Lagersysteme LS, ein Belastungszustand der Arbeitsmaschine 1 und/oder einzelner Strukturbauteile, die Lastspiele an einem Strukturbauteil, eine Bewegungsgeschwindigkeit der Arbeitsmaschine oder eines Strukturbauteils hiervon, oder andere, körperschallrelevante Zustandsparameter erfasst werden und/oder Veränderungen hiervon bestimmt werden können.

Die von der Erfassungseinrichtung 10 erfassten Umgebungs- und/oder Zustandsveränderungen werden von einer Anpasseinrichtung 14 des KI-Systems 9 dazu verwendet, die Auswertekriterien der Auswerteeinrichtung 7 und/oder das für den Signalvergleich zugrunde gelegte Körperschallsignal-Referenzmuster laufend anzupassen.

Insbesondere kann durch das KI-System 9 der akustische Footprint der Arbeitsmaschine 1 bzw. des Lagersystems LS in Abhängigkeit vom Alter der Arbeitsmaschine 1 bzw. des Lagersystems LS, dem Maschinen- und/oder Betriebszustand und den Veränderungen von Umwelteinflüssen angepasst werden. Hierdurch kann die Prognose immer scharf gehalten und die Fehlerquote minimiert werden. Vorteilhafterweise kann das System dabei dazu ausgebildet sein, im Neuzustand des Strukturbauteils SB bzw. des Lagersystems LS das Schwingverhalten und/oder die Schwingantwort des Strukturbauteils SB, LS im Betrieb und/oder auf vorbestimmte Belastungen zu ermitteln, wobei das System hierzu einen Neuzustand-Ermittlungs-Baustein umfassen kann, der mit einem hinterlegten Algorithmus 16 das besagte Schwingverhalten und/oder die Schwingantwort des Strukturbauteils ermitteln kann, vgl. Fig. 7. Insbesondere kann eine Grundsystemcharakteristik und eine Systemgrundcharakteristik bestimmt werden. Hierfür können Kennwerte aus Messsignalen eines oder mehrerer Sensoren 6, aus der Frequenzanalyse und/oder der Frequenzbetrachtung des zumindest einen Messsignals, dem Energieinhalt des Messsignals, dem Vergleich von Messsignalabschnitten und/oder andere Analysemethoden und deren Kombination verwendet werden, vgl. Fig. 7.

Vorteilhafterweise kann die Auswerteeinrichtung 7 dazu ausgebildet sein, im Betrieb einen stetigen Vergleich zwischen einer Live-Schwingantwort mit der genannten Grundsystemcharakteristik und/oder der genannten Systemgrundcharakteristik durchzuführen und das Vergleichsergebnis mit einer Toleranzgrenze abzugleichen, vgl. Fig. 7. Hierbei kann die Auswerteeinheit 7 mittels eines KI-Bausteins 15 eine oder mehrere Selbstlern- bzw. Kl-Schleifen durchlaufen, vgl. Fig. 7 bis 9

Insbesondere kann die Auswerteeinrichtung 7 dazu ausgebildet sein, bei einer Überschreitung einer Toleranzgrenze ein unzulässiges Ereignis und/oder einen unzulässigen Betriebszustand anzunehmen und ggf. einen Prüfmodus anzustoßen, welcher vorzugsweise eine Ursache für die Überschreitung der Toleranzgrenze daraufhin analysiert, ob die Ursache in den Umgebungsbedingungen und/oder einer Überlastung und/oder einem anderen Systemzustand liegt, vgl. Fig. 8.

Wird im besagten Prüfmodus eine Ursache positiv identifiziert, kann die Überschreitung der Toleranzgrenze darauf bezogen werden, während anderenfalls davon ausgegangen werden kann, dass es eine Veränderung am Strukturbauteil, insbesondere in der Struktursteifigkeit ist, und/oder das System nicht mehr betrieben werden darf und einer detaillierten Überprüfung bedarf.

Die genannte Toleranzgrenze wird vorteilhafterweise mit Hilfe des selbstlernenden Systems kontinuierlich oder zyklisch immer wieder neu bestimmt, wobei das System eine oder mehrere Optimierungs-Schleifen unter Verwendung des KI-Bausteins 15 durchlaufen kann. Vorteilhafterweise kann in die Bestimmung der Toleranzgrenze eine aktuelle Maschinenzustandsgröße wie beispielsweise ein Verschleiß, eine Alterung von Komponenten und dergleichen, und/oder vorherige Toleranzgrenzenüberschreitungen einbezogen werden bzw. Berücksichtigung finden.

Die neu bestimmte Toleranzgrenze wird in die Überprüfungsschleife einbezogen, so dass die Toleranzgrenzen an den neuen Anlagenzustand angepasst werden.

## Patentansprüche

1. Vorrichtung zum Bestimmen von Schädigungen an Strukturbauteilen (SB), beispielsweise Großwälzlagern (LS), von Arbeitsmaschinen, insbesondere Bau-, Materialumschlags- und/oder Fördermaschinen, mit zumindest einem Körperschallsensor (6) zum Erfassen von Körperschallsignalen zumindest eines Strukturbauteils der Arbeitsmaschine (1) sowie einer Auswerteeinrichtung (7) zum Auswerten der erfassten Körperschallsignale und Bestimmen des Schädigungszustands anhand eines Vergleichs der erfassten Körperschallsignale mit zumindest einem Körperschallsignal-Referenzmuster, **dadurch gekennzeichnet, dass** eine Erfassungseinrichtung (10) zum Erfassen von körperschallrelevanten Zustands- und/oder Umweltveränderungen sowie eine Anpasseinrichtung (14) zum Anpassen des zumindest einen Körperschallsignal-Referenzmusters und/oder eines Auswertekriteriums der Auswerteeinrichtung (7) anhand der erfassten Zustands- und/oder Umweltveränderungen vorgesehen sind, wobei die Auswerteeinrichtung (7) und die Anpasseinrichtung (14) als ein selbstlernendes System und/oder als Teil eines selbstlernenden Systems (9) ausgebildet sind, das den Einfluss erfasster Zustands- und/oder Umweltveränderungen auf den Körperschall der Arbeitsmaschine (1) und/oder des Strukturbauteils abschätzt und einen Zusammenhang zwischen Veränderungen der Körperschallsignale und Schädigungen des Strukturbauteils abschätzt.

2. Vorrichtung nach dem vorhergehenden Anspruch, wobei das selbstlernende System einen Regressionsanalysebaustein zum Bestimmen des Einflusses erfasster Zustands- und/oder Umweltveränderungen auf den Körperschall der Arbeitsmaschine (1) und/oder des Strukturbauteils und/oder zum Bestimmen des Zusammenhang zwischen Veränderungen der Körperschallsignale und Schädigungen des Strukturbauteils per Regressionsanalyse aufweist.

3. Vorrichtung nach einem der beiden vorhergehenden Ansprüche, wobei das selbstlernende System (9) einen Kl-basierten Schätzbaustein (15) zum Abschätzen von Zusammenhängen zwischen erfassten Körperschallsignalen und erfassten Zustands- und/oder Umweltveränderungen und/oder zum Abschätzen von Zusammenhängen zwischen Körperschallsignalveränderungen und Schädigungen des Strukturbauteils aufweist.

4. Vorrichtung nach einem der vorhergehenden Ansprüche, wobei die Erfassungseinrichtung (10) ein Alterungs-Erfassungsmittel (11) zum Erfassen des Alters und/oder einer Alterung und/oder der Betriebsstunden der Arbeitsmaschine (1) und/oder des Strukturbauteils aufweist und die Anpasseinrichtung (14) dazu ausgebildet ist, das zumindest eine Körperschallsignal-Referenzmuster und/oder das zumindest eine Auswertekriterium der Auswerteeinrichtung (7) in Abhängigkeit des erfassten Alters anzupassen.

5. Vorrichtung nach einem der vorhergehenden Ansprüche, wobei die Erfassungseinrichtung (10) eine Umweltsensorik (12) zum Erfassen von Umwelteinflüssen, die auf die Arbeitsmaschine (1) einwirken, aufweist und die Anpasseinrichtung (14) dazu ausgebildet ist, das zumindest eine Körperschallsignal-Referenzmuster und/oder das zumindest eine Auswertekriterium der Auswerteeinrichtung (7) in Abhängigkeit des erfassten Umwelteinflusses anzupassen.

6. Vorrichtung nach dem vorhergehenden Anspruch, wobei die Umweltsensorik (12) zumindest einen Sensor aus der Sensorgruppe Temperatursensor, Luftpartikelgehaltssensor, Salzgehaltsensor, Feuchtesensor, UV-Dosimeter, Schnee- und Eissensor und Regensensor aufweist und die Anpasseinrichtung (14) dazu ausgebildet ist, das zumindest eine Körperschallsignal-Referenzmuster und/oder das zumindest eine Auswertekriterium der Auswerteeinrichtung (7) in Abhängigkeit des zumindest einen Signals des zumindest einen Umweltsensors anzupassen.

7. Vorrichtung nach einem der vorhergehenden Ansprüche, wobei die Erfassungseinrichtung (10) zumindest ein Zustands-Erfassungsmittel (13) zum Erfassen eines Maschinen- und/oder Betriebszustandsparameters aufweist und die Anpasseinrichtung (14) dazu ausgebildet ist, das zumindest eine Körperschallsignal-Referenzmuster und/oder das zumindest eine Auswertekriterium der Auswerteeinrichtung (7) in Abhängigkeit des erfassten Maschinen- und/oder Betriebszustandsparameters anzupassen.

8. Vorrichtung nach dem vorhergehenden Anspruch, wobei das Zustands-Erfassungsmittel (13) dazu ausgebildet ist, einen Verschleiß des Strukturbauteils, ein Lagerspiel, eine Belastung des Strukturbauteils und/oder einen Rüstzustand der Arbeitsmaschine (1) zu erfassen, und die Anpasseinrichtung (14) dazu ausgebildet ist, das zumindest eine Körperschallsignal-Referenzmuster und/oder das zumindest eine Auswertekriterium der Auswerteeinrichtung (7) in Abhängigkeit des erfassten Verschleißes des Strukturbauteils, des Lagerspiels, der Belastung des Strukturbauteils und/oder des Rüstzustands der Arbeitsmaschine (2) anzupassen.

9. Vorrichtung nach einem der vorhergehenden Ansprüche, wobei die Anpasseinrichtung (14) dazu ausgebildet ist, die Veränderungen verschiedener Zustands- und/oder Umweltparameter summarisch und/oder individuell gewichtet für die Anpassung des zumindest einen Körperschallsignal-Referenzmusters und/oder des zumindest einen Auswertekriteriums zugrundezulegen.

10. Vorrichtung nach einem der vorhergehenden Ansprüche, wobei der zumindest eine Körperschallsensor (6) einem Lagersystem (LS) der Arbeitsmaschine (1) zugeordnet und dazu vorgesehen ist, an dem Lagersystem (LS) emittierten Körperschall zu erfassen, wobei das Lagersystem (LS) zwei zueinander verdrehbare Lagerringe (2, 3) aufweist und jedem der Lagerringe (2, 3) ein Körperschallsensor (6) zugeordnet ist.

11. Vorrichtung nach einem der vorhergehenden Ansprüche, wobei die Auswerteeinrichtung (7) dazu ausgebildet ist, Schädigungen des Strukturbauteils anhand von Abweichungen der erfassten Körperschallsignale in der Amplitude und/oder im Frequenzband und/oder im Frequenzmuster von dem zumindest einen Körperschallsignal-Referenzmuster zu bestimmen.

12. Vorrichtung nach einem der vorhergehenden Ansprüche, wobei die Auswerteeinrichtung (7) dazu ausgebildet ist, ein vom Körperschallsensor (6) live erfasstes Schwingverhalten des Strukturbauteils und einen daraus ermittelten Kennwert mit einer Toleranzgrenze zu vergleichen, und das selbstlernende System (9) dazu ausgebildet ist, die genannte Toleranzgrenze anhand aktueller Maschinenzustandsgrößen wie Verschleiß oder Alterung, und etwaiger vorheriger Toleranzgrenzüberschreitungen kontinuierlich oder zyklisch anzupassen.

13. Vorrichtung nach einem der vorhergehenden Ansprüche, wobei die Auswerteeinrichtung (7) dazu ausgebildet ist, Risse in den Laufringen eines Wälzlagers (LS) der Arbeitsmaschine zu bestimmen.

14. Arbeitsmaschine mit einer Vorrichtung, die gemäß einem der vorhergehenden Ansprüche ausgebildet ist, zum Bestimmen von Schädigungen an Strukturbauteilen der Arbeitsmaschine.

15. Arbeitsmaschine nach dem vorhergehenden Anspruch, die als Bau-, Materialumschlags- und/oder Fördermaschine ausgebildet ist, wobei die Auswerteeinrichtung (7) dazu ausgebildet ist, Risse in einem Großwälzlager (LS) der Arbeitsmaschine zu bestimmen.

## Claims

1. An apparatus for determining damage on structural components (SB), for example large roller bearings (LS), on work machines, in particular construction, material handling and/or conveying machines, comprising at least one structure-borne sound sensor (6) for detecting structure-borne sound signals of at least one structural component of the work machine (1) and also an evaluation device (7) for evaluating the detected structure-borne sound signals and determining the damage state on the basis of a comparison of the detected structure-borne sound signals with at least one structure-borne sound signal reference pattern, **characterized in that** provision is made for a detection device (10) for detecting state and/or environmental changes relevant to structure-borne sound, and also an adapting device (14) for adapting the at least one structure-borne sound signal reference pattern and/or an evaluation criterion of the evaluation device (7) on the basis of the detected state and/or environmental changes, wherein the evaluation device (7) and the adapting device (14) are configured as a self-learning system and/or as part of a self-learning system (9) which estimates the influence of detected state and/or environmental changes on the structure-borne sound of the work machine (1) and/or of the structural component and estimates a correlation between changes in the structure-borne sound signals and damage to the structural component.

2. The apparatus according to the foregoing claim, wherein the self-learning system comprises a regression analysis module for determining the influence of detected state and/or environmental changes on the structure-borne sound of the work machine (1) and/or the structural component and/or for determining the correlation between changes in the structure-borne sound signals and damage to the structural component by regression analysis.

3. The apparatus according to one of the two foregoing claims, wherein the self-learning system (9) comprises an Al-based estimation module (15) for estimating correlations between detected structure-borne sound signals and detected state and/or environmental changes and/or for estimating correlations between structure-borne sound signal changes and damage to the structural component.

4. The apparatus according to one of the foregoing claims, wherein the detection device (10) comprises an aging detecting means (11) for detecting the age and/or an aging and/or the operating hours of the work machine (1) and/or the structural component, and the adapting device (14) is configured to adapt the at least one structure-borne sound signal reference pattern and/or the at least one evaluation criterion of the evaluation device (7) depending on the detected age.

5. The apparatus according to one of the foregoing claims, wherein the detection device (10) has an environmental sensor system (12) for detecting environmental influences acting on the work machine (1), and the adapting device (14) is configured to adapt the at least one structure-borne sound signal reference pattern and/or the at least one evaluation criterion of the evaluation device (7) depending on the detected environmental influence.

6. The apparatus according to the foregoing claim, wherein the environmental sensor system (12) comprises at least one sensor from the sensor group including temperature sensor, air particle content sensor, salt content sensor, humidity sensor, UV dosimeter, snow and ice sensor and rain sensor, and the adapting device (14) is configured to adapt the at least one structure-borne sound signal reference pattern and/or the at least one evaluation criterion of the evaluation device (7) depending on the at least one signal of the at least one environmental sensor.

7. The apparatus according to one of the foregoing claims, wherein the detection device (10) comprises at least one state detection means (13) for detecting a machine and/or operating state parameter and the adapting device (14) is configured to adapt the at least one structure-borne sound signal reference pattern and/or the at least one evaluation criterion of the evaluation device (7) depending on the detected machine and/or operating state parameter.

8. The apparatus according to the foregoing claim, wherein the state detection means (13) is configured to detect wear of the structural component, a bearing clearance, a load on the structural component and/or a set-up condition of the work machine (1), and the adapting device (14) is configured to adapt the at least one structure-borne sound signal reference pattern and/or the at least one evaluation criterion of the evaluation device (7) depending on the detected wear of the structural component, the bearing clearance, the load on the structural component and/or the set-up condition of the work machine (2).

9. The apparatus according to one of the foregoing claims, wherein the adapting device (14) is configured to base the changes in various state and/or environmental parameters in a summarized and/or individually weighted manner for adapting the at least one structure-borne sound signal reference pattern and/or the at least one evaluation criterion.

10. The apparatus according to one of the foregoing claims, wherein the at least one structure-borne sound sensor (6) is associated with a bearing system (LS) of the work machine (1) and is provided for detecting structure-borne sound emitted at the bearing system (LS), wherein the bearing system (LS) comprises two bearing rings (2, 3) rotatable relative to each other and a structure-borne sound sensor (6) is associated with each of the bearing rings (2, 3).

11. The apparatus according to one of the foregoing claims, wherein the evaluation device (7) is configured to detect damage to the structural component on the basis of deviations of the detected structure-borne sound signals in amplitude and/or in frequency band and/or in frequency pattern from the at least one structure-borne sound signal reference pattern.

12. The apparatus according to one of the foregoing claims, wherein the evaluation device (7) is configured to compare a live oscillatory behaviour detected by the structure-borne sound sensor (6) and a characteristic value determined therefrom with a tolerance limit, and the self-learning system (9) is configured to adapt said tolerance limit continuously or cyclically on the basis of current machine condition variables such as wear or aging, and any previous tolerance limit exceedances.

13. The apparatus according to one of the foregoing claims, wherein the evaluation device (7) is configured to determine cracks in the races of a rolling bearing (LS) of the work machine.

14. A work machine comprising an apparatus configured according to one of the foregoing claims for determining damage to structural components of the work machine.

15. The work machine according to the foregoing claim, which is configured as a construction, material handling and/or conveying machine, wherein the evaluation device (7) is configured to determine cracks in a large rolling bearing (LS) of the work machine.

## Revendications

1. Dispositif pour la détermination d'endommagements sur des composants structurels (SB), par exemple des paliers à roulement de grande taille (LS), de machines de travail, notamment de machines de chantier, de manutention de matériaux et/ou de transport, avec au moins un capteur de bruit structurel (6) pour détecter des signaux de bruit structurel d'au moins un composant structurel de la machine de travail (1), ainsi qu'un appareil d'évaluation (7) pour évaluer les signaux de bruit structurel détecté et déterminer l'état d'endommagement à l'aide d'une comparaison des signaux de bruit structurel détectés avec au moins un schéma de référence de signal de bruit structurel, **caractérisé en ce qu'**un appareil de détection (10) est prévu pour détecter des modifications d'état et/ou environnementales pertinentes pour le bruit structurel, ainsi qu'un appareil d'adaptation (14) pour adapter l'au moins un schéma de référence de signal de bruit structurel et/ou un critère d'évaluation de l'appareil d'évaluation (7) sur la base des modifications d'état et/ou environnementales détectées, l'appareil d'évaluation (7) et l'appareil d'adaptation (14) étant réalisés sous la forme d'un système auto-apprenant et/ou sous forme de partie d'un système auto-apprenant (9) qui estime l'influence de modifications d'état et/ou environnementales détectées sur le bruit structurel de la machine de travail (1) et/ou du composant structurel et estime une relation entre les modifications des signaux de bruit structurel et les endommagements du composant structurel.

2. Dispositif selon la revendication précédente, où le système auto-apprenant présente un module d'analyse de régression pour déterminer l'influence de modifications d'état et/ou environnementales détectées sur le bruit structurel de la machine de travail (1) et/ou du composant structurel et/ou pour déterminer la relation entre les modifications des signaux de bruit structurel et les endommagements du composant structurel par analyse de régression.

3. Dispositif selon l'une quelconque des deux revendications précédentes, où le système auto-apprenant (9) présente un module d'estimation basé sur l'intelligence artificielle (15) pour estimer les relations entre les signaux de bruit structurel détectés et les modifications d'état et/ou environnementales détectés et/ou pour estimer les relations entre les modifications de signaux de bruit structurel et les endommagements du composant structurel.

4. Dispositif selon l'une quelconque des revendications précédentes, où l'appareil de détection (10) présente un moyen de détection du vieillissement (11) pour détecter l'âge et/ou un vieillissement et/ou les heures de fonctionnement de la machine de travail (1) et/ou du composant structurel, et l'appareil d'adaptation (14) est réalisé pour adapter l'au moins un schéma de référence de signal de bruit structurel et/ou l'au moins un critère d'évaluation de l'appareil d'évaluation (7) en fonction de l'âge détecté.

5. Dispositif selon l'une quelconque des revendications précédentes, où l'appareil de détection (10) présente un système de détection environnemental (12) pour détecter les influences environnementales qui agissent sur la machine de travail (1) et l'appareil d'adaptation (14) est réalisé pour adapter l'au moins un schéma de référence de signal de bruit structurel et/ou l'au moins un critère d'évaluation de l'appareil d'évaluation (7) en fonction de l'influence environnementale détectée.

6. Dispositif selon la revendication précédente, où le système de détection environnemental (12) présente au moins un capteur du groupe de capteurs comprenant un capteur de température, un capteur de teneur en particules de l'air, un capteur de teneur en sel, un capteur d'humidité, un dosimètre UV, un capteur de neige et de glace et un capteur de pluie, et l'appareil d'adaptation (14) est réalisé pour adapter l'au moins un schéma de référence de signal de bruit structurel et/ou l'au moins un critère d'évaluation de l'appareil d'évaluation (7) en fonction de l'au moins un signal de l'au moins un capteur environnemental.

7. Dispositif selon l'une quelconque des revendications précédentes, où l'appareil de détection (10) présente au moins un moyen de détection d'état (13) pour détecter un paramètre d'état de machine et/ou de fonctionnement, et l'appareil d'adaptation (14) est réalisé pour adapter l'au moins un schéma de référence de signal de bruit structurel et/ou l'au moins un critère d'évaluation de l'appareil d'évaluation (7) en fonction du paramètre d'état de machine et/ou de fonctionnement détecté.

8. Dispositif selon la revendication précédente, où le moyen de détection d'état (13) est réalisé pour détecter une usure du composant structurel, un jeu de palier, une charge du composant structurel et/ou un état d'équipement de la machine de travail (1), et l'appareil d'adaptation (14) est réalisé pour adapter l'au moins un schéma de référence de signal de bruit structurel et/ou l'au moins un critère d'évaluation de l'appareil d'évaluation (7) en fonction de l'usure détectée du composant structurel, du jeu du palier, de la charge du composant structurel et/ou de l'état d'équipement de la machine de travail (2).

9. Dispositif selon l'une quelconque des revendications précédentes, où l'appareil d'adaptation (14) est réalisé pour utiliser les modifications de différents paramètres d'état et/ou environnementaux de manière sommaire et/ou pondérée individuellement pour l'adaptation de l'au moins un schéma de référence de signal de bruit structurel et/ou de l'au moins un critère d'évaluation.

10. Dispositif selon l'une quelconque des revendications précédentes, où l'au moins un capteur de bruit structurel (6) est associé à un système de palier (LS) de la machine de travail (1) et est prévu pour détecter le bruit structurel émis par le système de palier (LS), où le système de palier (LS) présente deux bagues de palier (2, 3) pouvant tourner l'une par rapport à l'autre (2, 3) et un capteur de bruit structurel (6) est associé à chacune des bagues de palier (2, 3).

11. Dispositif selon l'une quelconque des revendications précédentes, où l'appareil d'évaluation (7) est réalisé pour déterminer des endommagements du composant structurel à partir d'écarts des signaux de bruit structurel détectés en amplitude et/ou en bande de fréquences et/ou en schéma de fréquences par rapport au schéma de référence de signal de bruit structurel.

12. Dispositif selon l'une quelconque des revendications précédentes, où l'appareil d'évaluation (7) est réalisé pour comparer un comportement vibratoire du composant structurel détecté en direct par le capteur de bruit structurel (6) et une valeur caractéristique déterminée à partir de celui-ci avec une limite de tolérance, et le système auto-apprenant (9) est réalisé pour adapter en continu ou de manière cyclique ladite limite de tolérance à l'aide de grandeurs d'état de machine actuelles, telles que l'usure ou le vieillissement, et d'éventuels dépassements antérieurs de la limite de tolérance.

13. Dispositif selon l'une quelconque des revendications précédentes, où l'appareil d'évaluation (7) est réalisé pour déterminer des fissures dans les bagues de roulement d'un palier à roulement (LS) de la machine de travail.

14. Machine de travail avec un dispositif réalisé selon l'une quelconque des revendications précédentes pour déterminer des endommagements sur des composants structurels de la machine de travail.

15. Machine de travail selon la revendication précédente, réalisée sous forme de machine de chantier, de manutention de matériaux et/ou de transport, où l'appareil d'évaluation (7) est réalisé pour déterminer des fissures dans un palier à roulement de grande taille (LS) de la machine de travail.
